# EUROPEAN PATENT APPLICATION

(11) **EP 3 608 570 A1**
(43) Date of publication of application: **12.02.2020**
(21) Application number: 18781851.3
(22) Date of filing: 04.04.2018
(51) Int. Cl.: F16K 31/68, F01P 7/16, F16K 1/34, F16K 1/36, F16K 1/42

(54) **OPENING AND CLOSING VALVE STRUCTURE FOR THERMOSTAT DEVICE**

(30) Priority: 07.04.2017 JP 2017076655
(71) Applicant: NOK Corporation, Tokyo 105-8585 (JP)
(72) Inventor: TAKAGI Ryota, Nihonmatsu-shi Fukushima 964-0811 (JP); TANJI Isao, Nihonmatsu-shi Fukushima 964-0811 (JP)
(74) Representative: TBK
(86) International application number: PCT/JP2018/014436
(87) International publication number: WO 2018/186444

(57) **Abstract**

A valve seat (16) is provided on the side of a thermo housing (11) of a thermostat device (1). A valve body (24) is provided on the side of a thermoelement (21) that is a movable body of the thermostat device (1). The valve seat (16) is formed of a laminated component of a rubber layer (19) deposited on the surface of a metal plate (18). The valve body (24) is formed of a metallic component (28) with no rubber layer deposited thereon, and then the valve body (24) is configured to be able to come into and out of contact with the rubber layer (19) of the valve seat (16).

## Description

### Technical Field

The disclosure relates to an opening and closing valve structure for a thermostat device.

### Background Art

A thermostat device that controls the temperature of cooling water of an automobile engine is used to resolve overcooling of the cooling water and enhance thermal efficiency of the engine, thereby reducing generation of hazardous waste.

FIG. 4 shows an example of a thermostat device 1 according to the background art (see Patent Document 1).

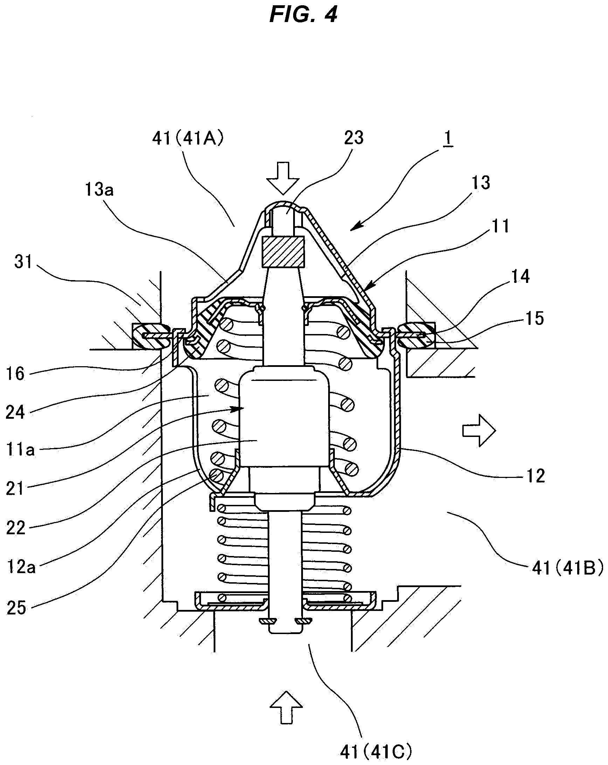

As shown in FIG. 4, the thermostat device 1 is provided with a thermo housing 11 as an enclosure. Inside the thermo housing 11, as a movable body of the thermostat device 1, a thermoelement 21 is provided so as to be relatively displaceable.

The thermo housing 11 is a combination of a cup-like thermo case 12 and a cap-like thermo cover 13 attached to this thermo case 12. The thermo cover 13 is provided with a flange 14 for installing the thermostat device 1 in a body 31, such as a vehicle body, and a gasket 15 for sealing is attached to a distal end (an outer peripheral end) of the flange 14. The thermo cover 13 is provided with an opening portion 13a that allows a radiator side 41A of a fluid passage 41 to communicate with an internal space 11a of the thermo housing 11, and the thermo case 12 is provided with an opening portion 12a that allows the internal space 11a of the thermo housing 11 to communicate with an engine side 41B of the fluid passage 41. Reference numeral 41C denotes a bypass side of the fluid passage 41.

The thermoelement 21 includes a hollow element case 22, and the inside of this element case 22 is filled with an appropriate amount of thermally expandable/contractible fluid (not shown), such as wax. The element case 22 is attached with a rod-like piston 23 that makes an extending/retracting movement from the element case 22 toward the thermo cover 13 (upward in the drawings) according to thermal expansion and thermal contraction of the thermally expandable/contractible fluid.

The thermo cover 13 is provided with a valve seat 16 that is located at the base of the flange 14 and has an annular stepped shape. A valve body 24 is provided on the outer peripheral side of the thermoelement 21 and on the outer periphery of the element case 22. The thermostat device 1 is provided with an opening and closing valve structure that causes the valve body 24 to come into and out of contact with the valve seat 16, thereby opening and closing the opening portion 13a provided on the thermo cover 13, i.e., opening and closing the communication of the radiator side 41A of the fluid passage 41 and the internal space 11a of the thermo housing 11. A coil spring 25 is installed between the valve body 24 and the thermo case 12.

In the thermostat device 1 configured as above, if the thermally expandable/contractible fluid thermally expands according to a change in temperature of fluid (cooling water), the piston 23 makes an extending movement toward the thermo cover 13 and presses the thermo cover 13. The thermo cover 13 is, as part of the thermo housing 11, fixed to the body 31; therefore, due to a reaction force generated at this time, the thermoelement 21 is displaced in a direction of moving away from the thermo cover 13 (a downward direction in FIG. 4) while compressing the coil spring 25. With this, the valve body 24 moves away from the valve seat 16, thus the valve of the opening and closing valve structure is opened, and the opening portion 13a is opened, and the fluid circulates.

When the opening and closing valve structure is in an open valve state, if the thermally expandable/contractible fluid thermally contracts according to a change in temperature of the fluid, the piston 23 makes a retracting movement, thus the thermoelement 21 is displaced in a direction of coming closer to the thermo cover 13 (an upward direction in FIG. 4) by elasticity of the coil spring 25. With this, the valve body 24 comes in contact with (sits on) the valve seat 16, thus the valve of the opening and closing valve structure is closed, and the opening portion 13a is obstructed.

### Prior Art Document

### Patent Document

Patent Document 1: Japanese Unexamined Patent Application Publication No. 2013-241918

### Summary of Invention

### Problem to be Solved

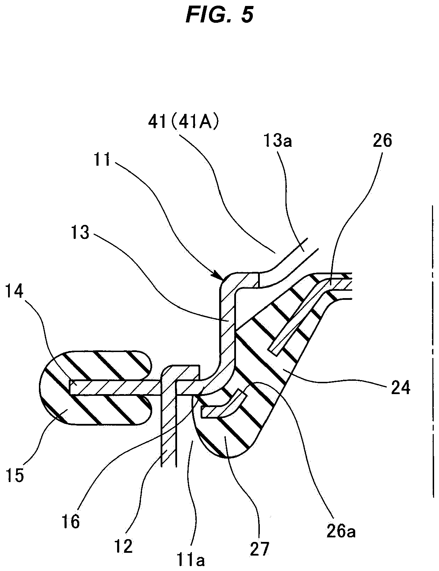

In the thermostat device 1 according to the above-described background art, as shown in an enlarged view of FIG. 5, the valve seat 16 included in the opening and closing valve structure is formed of the thermo cover 13, and the thermo cover 13 is formed of a metal plate, thus the valve seat 16 is also formed of the metal plate. The valve body 24 is formed of a combination of a seal holder 26, which is made of a metal plate and fitted onto the outer periphery of the element case 22 (FIG. 4) on the outer peripheral side of the thermoelement 21 (FIG. 4), and a seal 27, which is a rubbery elastic body held by this seal holder 26. Therefore, the rubbery elastic body constituting the valve body 24 can come into and out of contact with the metal plate forming the valve seat 16.

The valve body 24 is produced by forming a through-hole 26a on the metal plate forming the seal holder 26 and integrally molding the rubbery elastic body with this metal plate. Thus, there are disadvantages that a mold for rubber molding is required to produce the valve body 24, and it takes a lot of time and trouble to produce it.

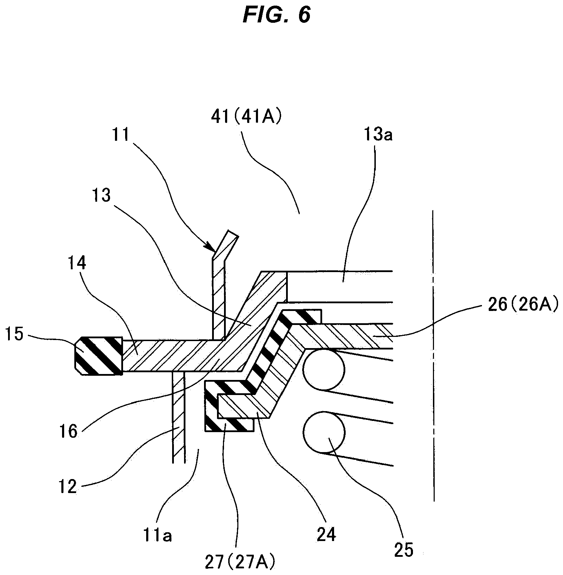

To resolve these disadvantages, for example, as shown in a comparative example of FIG. 6, a rubber layer 27A formed of a rubbery elastic body may be deposited (stuck) on the surface of a metal plate 26A without forming a through-hole. In this case, the valve body 24 can be produced without using a mold.

However, the valve body 24 is part of a movable body that is displaced in a state of being exposed to fluid in the thermo housing 11; therefore, fluid pressure is likely to affect a junction of the metal plate 26A and the rubber layer 27A, and there is concern that the rubber layer 27A may come off from the metal plate 26A. It is concern for rubber separation due to lack of water resistance. If the rubber layer 27A has come off from the metal plate 26A, it fails to obstruct the opening portion 13a, and the fluid always flows, and therefore a vehicle goes into an overcooling state. This may cause reduction in fuel efficiency.

It is desired to make a rubber layer less likely to come off from a metal plate even in a case of adopting an opening and closing valve structure for a thermostat device in which the rubber layer is deposited on the surface of the metal plate.

### Means for Solving the Problem

An opening and closing valve structure includes a valve seat that is a laminated component of a rubber layer deposited on a metal plate and is provided on the side of an enclosure of a thermostat device; and a valve body that is a metallic component with no rubber layer deposited thereon and is provided on the side of a movable body of the thermostat device so as to be able to come into and out of contact with the rubber layer of the valve seat.

### Effect

It is possible to make a rubber layer less likely to come off from a metal plate even in an opening and closing valve structure in which the rubber layer is deposited on the surface of the metal plate.

### Brief Description of Drawings

FIG. 1 is a vertical cross-sectional view of a thermostat device including an opening and closing valve structure according to an embodiment.
FIG. 2 is a diagram showing the opening and closing valve structure; FIG. 2(A) is a vertical cross-sectional view showing a closed valve state of a main portion of the opening and closing valve structure, and FIG. 2(B) is a vertical cross-sectional view showing an open valve state of the main portion of the opening and closing valve structure.
FIG. 3 is a vertical cross-sectional view of the thermostat device including an opening and closing valve structure according to another embodiment.
FIG. 4 is a vertical cross-sectional view showing an example of a thermostat device according to the background art.
FIG. 5 is an enlarged vertical cross-sectional view of a main portion of an opening and closing valve structure shown in FIG. 4.
FIG. 6 is a cross-sectional view of a main portion of an opening and closing valve structure according to a comparative example.

### Description of Embodiments

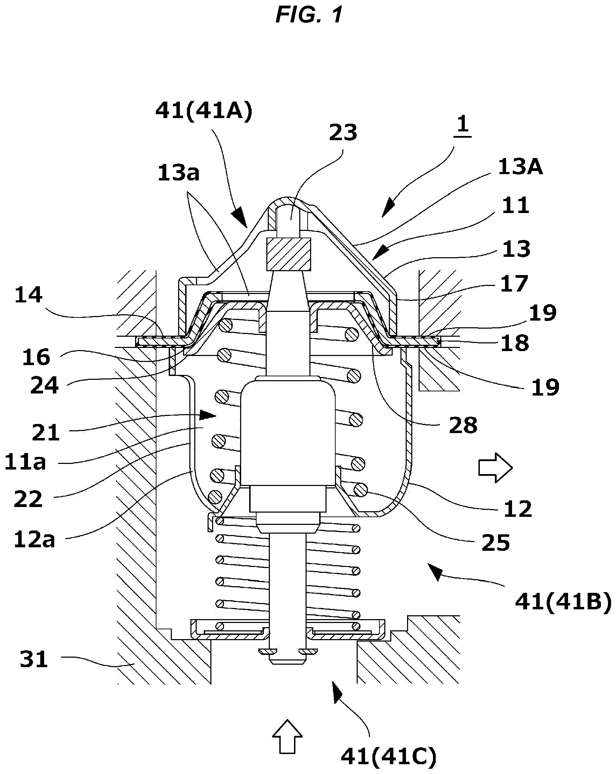

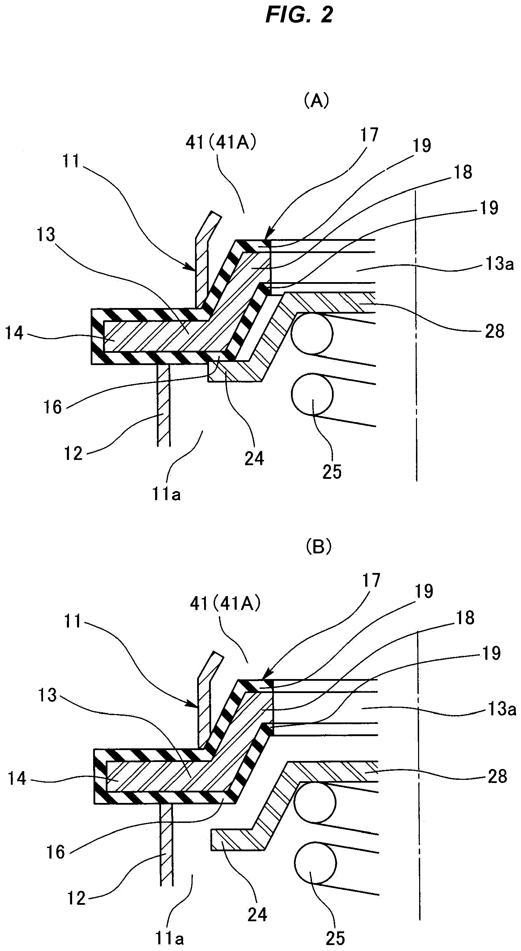

An embodiment is described on the basis of FIGs. 1, 2(A), and 2(B).

As shown in FIGs. 1, 2(A), and 2(B), a thermostat device 1 is provided with a thermo housing 11 as an enclosure. Inside the thermo housing 11, as a movable body of the thermostat device 1, a thermoelement 21 is provided so as to be relatively displaceable.

The thermo housing 11 is a combination of a cup-like thermo case 12, a thermo cover 13 and a cap-like cap cover 13A that are attached to this thermo case 12. The thermo case 12, the thermo cover 13, and the cap cover 13A are fixed by a fixation structure (not shown).

The thermo cover 13 and the cap cover 13A are provided with an opening portion 13a that allows a radiator side 41A of a fluid passage 41 to communicate with an internal space 11a of the thermo housing 11. The thermoelement 21 goes through the opening portion 13a provided on the thermo cover 13. The thermo cover 13 is provided with a flange 14 for installing the thermostat device 1 in a body 31, such as a vehicle body.

The thermo case 12 is provided with an opening portion 12a that allows the internal space 11a of the thermo housing 11 to communicate with an engine side 41B of the fluid passage 41.

Reference numeral 41C denotes a bypass side of the fluid passage 41.

The thermoelement 21 includes a hollow element case 22, and the inside of this element case 22 is filled with an appropriate amount of thermally expandable/contractible fluid (not shown), such as wax. The element case 22 is attached with a rod-like piston 23 that makes an extending/retracting movement from the element case 22 toward the thermo cover 13 (upward in the drawings) according to thermal expansion and thermal contraction of the thermally expandable/contractible fluid.

The thermo cover 13 is provided with a valve seat 16 that is located at the base of the flange 14 and has an annular stepped shape around the opening portion 13a. A valve body 24 is annularly provided on the outer peripheral side of the thermoelement 21 and on the outer periphery of the element case 22. The thermostat device 1 is provided with an opening and closing valve structure that causes the valve body 24 to come into and out of contact with the valve seat 16, thereby opening and closing the opening portion 13a provided on the thermo cover 13, i.e., opening and closing the communication of the radiator side 41A of the fluid passage 41 and the internal space 11a of the thermo housing 11. A coil spring 25 is installed between the valve body 24 and the thermo case 12. The coil spring 25 causes the thermoelement 21 to be restored.

In the thermostat device 1 configured as above, the thermoelement is displaced according to a change in temperature of fluid (cooling water). With this, the valve body 24 comes into and out of contact with the valve seat 16. Thus, the opening portion 13a is opened and closed. That is, if the thermally expandable/contractible fluid thermally expands according to a change in temperature of fluid (cooling water), the piston 23 makes an extending movement toward the thermo cover 13 and presses the thermo cover 13. The thermo cover 13 is, as part of the thermo housing 11, fixed to the body 31; therefore, due to a reaction force generated at this time, the thermoelement 21 is displaced in a direction of moving away from the thermo cover 13 (a downward direction in FIG. 1) while compressing the coil spring 25. With this, the valve body 24 moves away from the valve seat 16, thus the valve of the opening and closing valve structure is opened, and the opening portion 13a is opened, and the fluid circulates.

When the opening and closing valve structure is in an open valve state, if the thermally expandable/contractible fluid thermally contracts according to a change in temperature of the fluid, the piston 23 makes a retracting movement, thus the thermoelement 21 is displaced in a direction of coming closer to the thermo cover 13 (an upward direction in FIG. 1) by elasticity of the coil spring 25. With this, the valve body 24 comes in contact with (sits on) the valve seat 16, thus the valve of the opening and closing valve structure is closed, and the opening portion 13a is obstructed.

As shown in FIGs. 2(A) and 2(B), the opening and closing valve structure of the thermostat device according to the present embodiment includes the thermo housing 11, the thermoelement (not shown) as a movable body of the thermostat device, the opening portion 13a, the valve seat 16, the valve body 24, and the coil spring 25.

The valve seat 16 is formed of a laminated component 17 of a rubber layer 19 deposited (stuck) on the surface of a metal plate 18. Since the entire surface of the thermo cover 13 is formed of the laminated component 17 of the rubber layer 19 deposited on the surface of the metal plate 18, the valve seat 16 is provided as part of the laminated component 17 forming the thermo cover 13.

An original form of the laminated component 17 before it is processed is the flat metal plate 18 having a fixed thickness coated with the rubber layer 19 having a fixed thickness over its entire surfaces in a thickness direction like a film, and this unprocessed laminated component 17 is pressed into the thermo cover 13 having, for example, a cup-like shape.

In the present embodiment, the rubber layers 19 are deposited on the both surfaces of the metal plate 18 in the thickness direction; however, the rubber layer 19 may as well be deposited only on one surface facing the side of the internal space 11a of the thermo housing 11. Furthermore, in FIGs. 1, 2(A), and 2(B), the rubber layers 19 are deposited on not only the both surfaces of the metal plate 18 in the thickness direction but also its thickness surface (a distal end surface of the flange 14); however, the rubber layer 19 of this portion may as well be omitted so that the thickness surface of the metal plate 18 is exposed.

The valve body 24 is formed of a single metallic component 28 with no rubber layer deposited thereon. The valve body 24 is formed, for example, by pressing a flat metal plate having a fixed thickness.

FIG. 2(A) shows a closed valve state in which the valve body 24 is in contact with (sits on) the valve seat 16; in this state, if the valve body 24 is displaced downward in the drawing, it goes into an open valve state shown in FIG. 2(B).

Therefore, the opening and closing valve structure of the thermostat device according to the present embodiment is a structure in which the metallic component 28 of the valve body 24 can come into and out of contact with the rubber layer 19 of the valve seat 16.

Furthermore, as shown in FIG. 2(A), it is structured that when the valve is closed, the rubber layer 19 of the valve seat 16 is held between the metal plate 18 of the valve seat 16 and the metallic component 28 of the valve body 24 and is compressed and deformed in the thickness direction.

In the opening and closing valve structure according to the present embodiment, the valve seat 16 provided on the side of the thermo housing 11 is made of the laminated component 17 of the rubber layer 19 deposited on the surface of the metal plate 18, and the valve body 24 provided on the side of the thermoelement is made of the metallic component 28 with no rubber layer deposited thereon, and the metallic component 82 of the valve body 24 can come into and out of contact with the rubber layer 19 of the valve seat 16. Thus, the rubber layer 19 is not part of the thermoelement but part of the thermo housing 11. The rubber layer 19 that is part of the thermo housing 11 is not displaced in the thermo housing 11, and therefore is less likely to be affected by fluid pressure. Therefore, the opening and closing valve structure according to the present embodiment can prevent the rubber layer 19 from being affected by fluid pressure and coming off from the metal plate 18, and can make the rubber layer 19 less likely to come off from the metal plate 18.

In the opening and closing valve structure according to the present embodiment, the entire thermo cover 13 is formed of the laminated component 17 including the rubber layer 19, and the valve seat 16 is provided as part of this laminated component 17. Thus, it is not necessary to attach a rubber component for sealing to the valve seat 16 additionally. Therefore, it is possible to facilitate the production of the valve seat 16.

In the opening and closing valve structure according to the present embodiment, the entire thermo cover 13 is formed of the laminated component 17 including the rubber layer 19, and the rubber layer 19 is deposited on the flange 14 as well. Thus, the rubber layer 19 deposited on the flange 14 can be a substitute for the gasket 15 for sealing in the background art described above. Therefore, even without having to attach the gasket 15 to the flange 14 additionally, it is possible to ensure sealing between the flange 14 and the body 31.

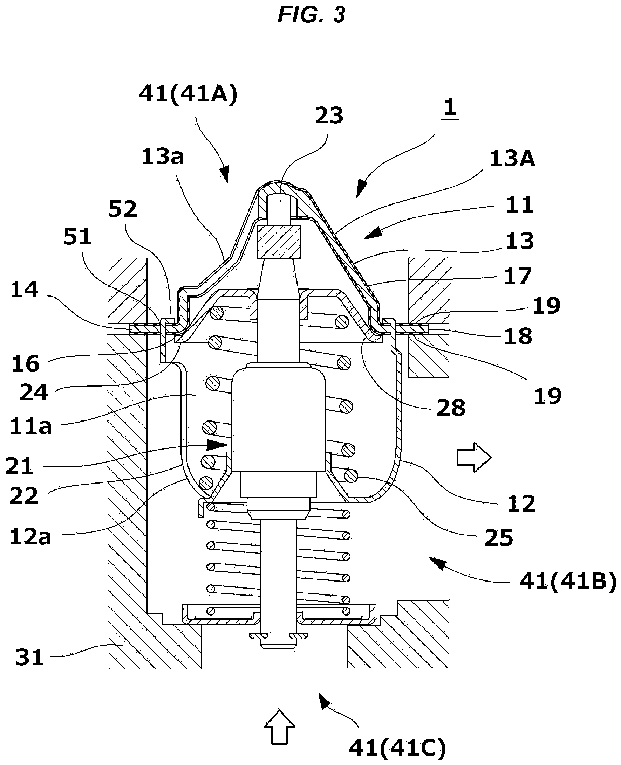

FIG. 3 shows another embodiment.

In the present embodiment, the thermo cover 13 and the cap cover 13A are integrated into one component. That is, while the thermo cover 13 shown in FIGs. 1, 2(A), and 2(B) has a shallow inverted cup-like shape, the thermo cover 13 in the present embodiment has a cup-like shape similar to the cap cover 13A and completely covers the thermoelement 21. Therefore, in the present embodiment, the cap cover 13A is not provided.

The flange 14 of the thermo cover 13 is provided with a plurality of connection holes 51 along a circumferential direction. The thermo case 12 is provided with a plurality of connection claws 52 on its upper end. The respective sizes, shapes, and positions of the connection holes 51 and the connection claws 52 are made to correspond with each other. Thus, by inserting the connection claws 52 into the connection holes 51 and bending the connection claws 52 to the inner peripheral side of the thermo cover 13, the thermo case 12 and the thermo cover 13 can be integrally connected to each other. At this time, the thermo cover 13 is coated with the rubber layer 19, thus the sealability is maintained.

In the opening and closing valve structure according to the present embodiment, the thermo housing 11 can be made up by only the thermo case 12 and the thermo cover 13. Therefore, the cap cover 13A is not required, which makes it possible to reduce the number of components and also possible to facilitate the production.

### Description of Reference Numerals

- 1: thermostat device
- 11: thermo housing
- 11a: internal space
- 12: thermo case
- 12a, 13a: opening portion
- 13: thermo cover
- 13A: cap cover
- 14: flange
- 15: gasket
- 16: valve seat
- 17: laminated component
- 18, 26A: metal plate
- 19, 27A: rubber layer
- 21: thermoelement (movable body)
- 22: element case
- 23: piston
- 24: valve body
- 25: coil spring
- 26: seal holder
- 26a: through-hole
- 27: seal
- 28: metallic component
- 31: body
- 41: fluid passage
- 41A: radiator side
- 41B: engine side
- 41C: bypass side
- 51: connection hole
- 52: connection claw

## Claims

1. An opening and closing valve structure for a thermostat device, comprising:
a valve seat that is a laminated component of a rubber layer deposited on a surface of a metal plate and is provided on a side of an enclosure of the thermostat device; and
a valve body that is a metallic component with no rubber layer deposited thereon and is provided on a side of a movable body of the thermostat device so as to be able to come into and out of contact with the rubber layer of the valve seat.

2. The opening and closing valve structure for the thermostat device according to claim 1, wherein the enclosure includes:
a thermo case; and
a thermo cover that is formed of the laminated component entirely and constitutes the valve seat, and is attached to the thermo case.

3. The opening and closing valve structure for the thermostat device according to claim 2, wherein the thermo cover allows the movable body of the thermostat device to go therethrough.

4. The opening and closing valve structure for the thermostat device according to claim 2, wherein the thermo cover covers the movable body of the thermostat device.

5. The opening and closing valve structure for the thermostat device according to claim 2, wherein the thermo cover includes a flange for fixing the thermostat device to a body on an outer periphery thereof.
